# EUROPEAN PATENT APPLICATION

(11) **EP 2 418 654 A1**
(43) Date of publication of application: **15.02.2012**
(21) Application number: 10761299.6
(22) Date of filing: 22.02.2010
(51) Int. Cl.: G21F 9/06, B01D 61/44, C02F 1/469, C02F 1/70

(54) **METHOD FOR TREATING RADIOACTIVE WASTE SOLUTION AND DEVICE FOR TREATING SAME**

(30) Priority: 08.04.2009 JP 2009093878
(71) Applicant: JGC Corporation, Chiyoda-Ku Tokyo 100-0004 (JP)
(72) Inventor: KATO, Takashi, Kanagawa 220-6001 (JP); NUMATA, Mamoru, Ibaraki 311-1313 (JP); SUZUKI, Yasuhiro, Ibaraki 311-1313 (JP); MORIMOTO, Yasutomi, Ibaraki 311-1313 (JP)
(74) Representative: Becker Kurig Straus
(86) International application number: PCT/JP2010/001136
(87) International publication number: WO 2010/116591

(57) **Abstract**

There is provided a method for treating a radioactive liquid waste containing a sodium salt, the method comprising: a liquid waste reducing step of partially reducing sodium nitrate contained in a radioactive liquid waste to convert the radioactive liquid waste into a reduced solution containing at least one of sodium hydroxide, sodium hydrogencarbonate, and sodium carbonate; and an electrodialysis step of performing electrodialysis of the reduced solution by supplying the reduced solution to an anode chamber of an electrolytic cell, the electrolytic cell including an anode and a cathode disposed on both sides of a permeable membrane which a sodium ion selectively permeates, wherein, in the electrodialysis step, a sodium ion that has permeated the permeable membrane is separated and recovered as sodium hydroxide in a cathode chamber, a radioactive substance left in the anode chamber is separated as a radioactive substance concentrated solution, and the separated sodium hydroxide and radioactive substance concentrated solution are recovered; and a production rate of the at least one of sodium hydroxide, sodium hydrogencarbonate, and sodium carbonate in the liquid waste reducing step is equalized with a recovery rate of the sodium ion in the electrodialysis step.

## Description

### Technical Field

The present invention relates to a method for treating a radioactive liquid waste and an apparatus for treating the same. More specifically, the present invention relates to a method for treating a radioactive liquid waste and an apparatus for treating the same that separate and recover a radioactive substance by performing electrodialysis on a radioactive liquid waste mainly composed of sodium nitrate discharged from nuclear facilities, particularly reprocessing facilities, to selectively remove sodium.
This application claims priority to Japanese Patent Application No. 2009-093878, filed April 8, 2009, the contents of which are incorporated herein by reference.

### Background Art

A radioactive liquid waste mainly containing a large amount of sodium nitrate (NaNO₃) as an inorganic salt is generated from nuclear facilities, particularly spent nuclear fuel reprocessing facilities. A technology that separates sodium from sodium nitrate in the liquid waste has been developed.
For example, the United States Department of Energy (DOE) has examined a method for separating sodium ions (Na⁺) from a radioactive liquid waste mainly composed of sodium nitrate using a Na super ionic conductor membrane (NASICON membrane) or an organic cation exchange membrane. It has been demonstrated that a sodium ion can be recovered as sodium hydroxide (NaOH) using the Na super ionic conductor membrane or the organic cation exchange membrane.

A method in which many types of reagents are added to a liquid waste to individually coprecipitate principal nuclides and the solid content is then separated using an ultrafiltration membrane or the like is employed as a technology that separates radioactive nuclides contained in a radioactive liquid waste from sodium nitrate. In this method, many types of reagents are added and thus the amount of liquid waste is increased. In addition, the decontamination factor (DF) that indicates the extent that a certain radioactive nuclide has been removed is at most about 100, and the removal efficiency of radioactive nuclides in the radioactive liquid waste is low.

An electrodialysis method using a sodium permselective membrane is exemplified as a technology that reduces the volume of a radioactive liquid waste (low-level concentrated liquid waste) mainly composed of sodium nitrate generated in a reprocessing step. This technology may reduce the volume of a radioactive liquid waste by separating and recovering only sodium from the radioactive liquid waste. A test for treating a liquid waste has been conducted using an organic membrane (e.g., Nafion (registered trademark)), an inorganic membrane (NASICON membrane), or the like.
Papers such as Non Patent Literatures 1 to 4 are published regarding a technology that recovers sodium from a liquid waste containing a radioactive substance and/or a liquid waste not containing a radioactive substance by an electrodialysis method using a sodium permselective membrane.

Non Patent Literatures 1 to 4 disclose a technology that recovers sodium from a radioactive liquid waste (low-level radioactive concentrated liquid waste) containing sodium nitrate or from a liquid waste that contains sodium and is generated from a pulp mill or the like by an electrodialysis method using a NASICON membrane.
In this technology, a target liquid waste is supplied to an anode chamber and a cathode chamber is filled with a sodium hydroxide solution. Sodium ions are moved from the anode chamber to the cathode chamber by performing electrodialysis using a NASICON membrane as a diaphragm between the anode chamber and cathode chamber of an electrolytic cell.
In Non Patent Literatures 1 to 4, it has been reported that only sodium can be separated and recovered from a radioactive liquid waste containing many types of radioactive nuclides without containing cesium-137 (Cs-137), which belongs to the same group as that of sodium.

Patent Literatures 1 and 2 and papers such as Non Patent Literatures 5 to 8 are published regarding a technology that reduces and decomposes nitrate ions (NO₃⁻) contained in a radioactive liquid waste to convert the nitrate ions into harmless nitrogen gas.
In Non Patent Literatures 5 to 8 and Patent Literatures 1 and 2, nitrate ions in a sodium nitrate liquid waste are decomposed with a catalyst and a reducing agent, and the type of reduction product is dependent on the type of catalyst. With different types of catalysts, nitrate ions (NO₃⁻) are reduced to nitrite ions (NO₂⁻) using a Cu-Pd/AC catalyst at the first stage, and the nitrite ions are reduced to nitrogen (N₂) using a Cu/β-alumina catalyst at the second stage. Since explosive gas is not preferred in nuclear facilities, a reducing agent such as hydrazine (N₂H₄) or formaldehyde (HCOH) is used.

The following technology is disclosed to reduce the volume of a radioactive liquid waste.
For example, in order to reduce the volume of a radioactive liquid waste containing a high-concentration sodium salt by recovering sodium and an acid from the liquid waste and recycle the sodium and acid, there is disclosed a radioactive liquid waste in which a sodium ion and an anion are separated and recovered as sodium hydroxide and an acid, respectively, from the radioactive liquid waste containing a sodium salt by electrodialysis. In this electrodialysis, two bipolar membranes are disposed between an anode and a cathode, and an anion exchange membrane and a sodium ion permselective membrane are disposed between the bipolar membranes so that the anion exchange membrane comes to the anode side and the sodium ion permselective membrane comes to the cathode side (e.g., refer to Patent Literature 3).

In order to significantly reduce the volume of sodium nitrate, which is a main component of a low-level radioactive concentrated liquid waste generated from reprocessing facilities, without producing NOₓ that applies a load to a waste gas system and achieve a closed radioactive treatment system by recycling a decomposition product, there is disclosed a method for reducing the volume of a low-level radioactive concentrated liquid waste that is recycled in reprocessing facilities. In this method, a low-level radioactive concentrated liquid waste generated from spent nuclear fuel reprocessing facilities is supplied to an electrolytic cell including a cation exchange membrane and an anion exchange membrane, and sodium hydroxide is produced and separated on the cathode side while at the same time nitric acid is produced and separated on the anode side (e.g., refer to Patent Literature 4).

There is also disclosed a method for individually recovering a nitrate and sodium hydroxide from an alkaline liquid waste containing sodium nitrate and sodium hydroxide (e.g., refer to Patent Literature 5).

Patent Literature 1: Japanese Unexamined Patent Application, First Publication No. 2004-074107
Patent Literature 2: Japanese Unexamined Patent Application, First Publication No. 2003-126872
Patent Literature 3: Japanese Unexamined Patent Application, First Publication No. 2000-321395
Patent Literature 4: Japanese Unexamined Patent Application, First Publication No. Hei 4-283700
Patent Literature 5: Japanese Unexamined Patent Application, First Publication No. Hei 8-066686

Non-Patent Literature 1: S. Balagopal, et al., Selective sodium removal from aqueous waste streams with NaSICON ceramics, Separation and Purification Technology 15 (1999) 231-237.
Non-Patent Literature 2: D.E. Kurath, et al., Caustic recycle from high-salt nuclear wastes using a ceramic-membrane salt-splitting process, Separation and Purification Technology 11 (1997) 185-198.
Non-Patent Literature 3: D.T. Hobbs, Radioactive Demonstration of Caustic Recovery from Low-Level Alkaline Nuclear Waste by an Electrochemical Separation Process, WSRC-TR-97-00363 (1998).
Non-Patent Literature 4: Ceramatec, Inc., Energy Efficient Process for Recycling Sodium Sulfate Utilizing Ceramic Solid Electrolyte, DOE contact No. DE-FCO2-95CE41158 (1999).
Non-Patent Literature 5:Y.Sakamoto, et al., Cu-Pd Bimetallic Cluster/AC as a Novel Catalyst for the Reduction of Nitrate to Nitrite, Chemistry letters, vol.33,No.7 (2004).
Non-Patent Literature 6:Y.Sakamoto, et al., A Two-sage Catalytic Process with Cu-Pd Cluster/Active Carbon and Pd/beta-Zeolite for Removal of Nitrate in Watar, Chemistry letters, vo1.34,No11 (2005) 1510-1511.
Non-Patent Literature 7: Y.Sakamoto, et al., Selective hydrogenation of nitrate to nitrite in water over Cu-Pd bimetallic clusters supported on active carbon, J. Mol. Cat. A, 250(2006)
Non-Patent Literature 8: Yi, Wang, et al., Palladium-Copper/Hydrophobic Active Carbon as a Highly Active and Selective Catalyst for Hydrogenation of Nitrate in Water, Chemistry letters, vol. 36, No.8(2007)

### Summary of Invention

### Technical Problem

As described above, in the case where sodium is separated and recovered from a radioactive liquid waste (low-level radioactive concentrated liquid waste) mainly composed of sodium nitrate by an electrodialysis method, sodium hydroxide that does not contain radioactive nuclides is produced in a cathode chamber and thus the volume of the low-level radioactive concentrated liquid waste can be reduced to some extent.
However, since nitric acid containing radioactive nuclides is produced in an anode chamber, an additional treatment needs to be performed on the nitric acid in terms of volume reduction. Moreover, since a strongly alkaline solution and a strongly acidic solution are present with an extremely thin sodium ion permselective membrane having a thickness of several millimeters therebetween, a severe accident caused when the membrane is damaged is significantly high.

In the case where sodium ions are separated and recovered from a low-level radioactive concentrated liquid waste by an electrodialysis method using a NASICON membrane, a decrease in the separation efficiency of sodium ions and an increase in the bath voltage are seen over time. These phenomena are unfavorable when the volume of a low-level radioactive concentrated liquid waste is reduced by an electrodialysis method because such phenomena increase the cost and a load on devices.
Although sodium hydroxide that does not contain radioactive nuclides can be separated and recovered from a low-level radioactive concentrated liquid waste by this electrodialysis method, the recovery of sodium hydroxide does not efficiently proceed because of the production of nitric acid.

In the case where a cation exchange membrane is used as a diaphragm of an electrolytic cell, not only sodium ions but also radioactive nuclides are moved. A bipolar membrane or an anion exchange membrane is used to recover an acid from an acid that contains radioactive nuclides and is produced by separating and recovering sodium, but an acid that does not contain radioactive nuclides cannot be recovered as in the case of the cation exchange membrane. Furthermore, since a bipolar membrane or an anion exchange membrane is an organic membrane, the radiation resistance is not sufficient unlike an inorganic membrane such as a NASICON membrane.

In this electrodialysis method, sodium ions are separated and then nitrate ions are decomposed or nitrate ions are decomposed and then sodium ions are separated. Therefore, the decomposition treatment is performed in a two-stage process. Compared with a multi-tank electrodialysis method, the number of devices and the amount of liquid waste retained in a liquid waste treatment system are increased.

A multi-tank electrodialysis method is exemplified as technologies disclosed in Patent Literatures 3 to 5. In the multi-tank electrodialysis method, nitrate ions are separated with an ion exchange membrane. However, such an ion exchange membrane cannot sufficiently separate nitrate ions.

In view of the foregoing, an object of the present invention is to provide a method for treating a radioactive liquid waste and an apparatus for treating a radioactive liquid waste that can efficiently separate and recover sodium ions from a radioactive liquid waste mainly composed of sodium nitrate in a continuous manner without containing radioactive nuclides and that can reduce nitrate ions to harmless nitrogen gas.

### MEANS FOR SOLVING THE PROBLEMS

The method for treating a radioactive liquid waste containing a sodium salt of the present invention includes: a liquid waste reducing step of partially reducing sodium nitrate contained in a radioactive liquid waste to convert the radioactive liquid waste into a reduced solution containing at least one of sodium hydroxide, sodium hydrogencarbonate, and sodium carbonate; and
an electrodialysis step of performing electrodialysis of the reduced solution by supplying the reduced solution to an anode chamber of an electrolytic cell, the electrolytic cell including an anode and a cathode disposed on both sides of a permeable membrane which a sodium ion selectively permeates,
wherein, in the electrodialysis step, a sodium ion that has permeated the permeable membrane is separated and recovered as sodium hydroxide in a cathode chamber, a radioactive substance left in the anode chamber is separated as a radioactive substance concentrated solution, and the separated sodium hydroxide and radioactive substance concentrated solution are recovered; and
a production rate of the at least one of sodium hydroxide, sodium hydrogencarbonate, and sodium carbonate in the liquid waste reducing step is equalized with a recovery rate of the sodium ion in the electrodialysis step.

The liquid waste reducing step may be performed by a treating method with a chemical reaction using hydrazine and/or formic acid as a reducing agent.

The treating method with a chemical reaction using hydrazine and/or formic acid as a reducing agent may be a treating method performed in the presence of a catalyst.

In the liquid waste reducing step, the production rate of the at least one of sodium hydroxide, sodium hydrogencarbonate, and sodium carbonate may be controlled by a supply rate of the reducing agent to the radioactive liquid waste.

The pH of the reduced solution produced in the liquid waste reducing step may be 10 or more.

In the liquid waste reducing step, a supply rate of the reducing agent to the radioactive liquid waste may be controlled based on a measured value of at least one of pH of the radioactive substance concentrated solution recovered in the anode chamber in the electrodialysis step, pH in a reducing device that reduces the radioactive liquid waste, and pH at an entrance of the anode chamber.

The radioactive substance concentrated solution recovered in the anode chamber in the electrodialysis step may be supplied in the liquid waste reducing step.

In the electrodialysis step, the recovery rate of the sodium ion may be controlled by a value of an electric current caused to flow between the anode and the cathode.

The apparatus for treating a radioactive liquid waste containing a sodium salt of the present invention includes: a reducing device that partially reduces sodium nitrate contained in a radioactive liquid waste to convert the radioactive liquid waste into a reduced solution containing at least one of sodium hydroxide, sodium hydrogencarbonate, and sodium carbonate;
an electrodialysis device including a permeable membrane which a sodium ion contained in the reduced solution selectively permeates, an anode chamber and a cathode chamber disposed with the permeable membrane therebetween, and an anode and a cathode respectively disposed on both sides of the permeable membrane; and
a pH meter that measures at least one of pH of a radioactive substance concentrated solution recovered in the anode chamber and supplied from the anode chamber to the reducing device, pH in the reducing device, and pH at an entrance of the anode chamber.

### Advantageous Effects of Invention

According to the method for treating a radioactive liquid waste of the present invention, the method for treating a radioactive liquid waste containing a sodium salt includes a liquid waste reducing step of partially reducing sodium nitrate contained in a radioactive liquid waste to convert the radioactive liquid waste into a reduced solution containing at least one of sodium hydroxide, sodium hydrogencarbonate, and sodium carbonate and an electrodialysis step of performing electrodialysis of the reduced solution by supplying the reduced solution to an anode chamber of an electrolytic cell, the electrolytic cell including an anode and a cathode disposed on both sides of a permeable membrane which a sodium ion selectively permeates, wherein, in the electrodialysis step, a sodium ion that has permeated the permeable membrane is separated and recovered as sodium hydroxide in a cathode chamber, a radioactive substance left in the anode chamber is separated as a radioactive substance concentrated solution, and the separated sodium hydroxide and radioactive substance concentrated solution are recovered; and a production rate of the at least one of sodium hydroxide, sodium hydrogencarbonate, and sodium carbonate in the liquid waste reducing step is equalized with a recovery rate of the sodium ion in the electrodialysis step. Therefore, pH can be retained in an alkaline state in the electrodialysis step and thus the separation of sodium ions (Na⁺) can be constantly maintained with high efficiency, which achieves the continuous treatment of the radioactive liquid waste. Since sodium ions that substantially do not contain radioactive nuclides can be selectively separated and recovered as sodium hydroxide from the radioactive liquid waste while at the same time only the radioactive nuclides can be separated from the radioactive liquid waste and concentrated, the volume reduction factor of the radioactive liquid waste can be increased. Since the liquid waste reducing step and the electrodialysis step are simultaneously performed and the reduced solution (including radioactive substance concentrated solution) is caused to circulate between the liquid waste reducing step and the electrodialysis step, the temperature of the solution needs only to be adjusted in at least one of the liquid waste reducing step and the electrodialysis step, which improves the energy efficiency. Since nitrate ions can be reduced to inert nitrogen gas, the environmental load can be eliminated. Since two actions (separation of sodium ions and decomposition of nitrate ions) are performed in a single system without disposing an intermediate layer, the amount of radioactive liquid waste retained in the system is small, which increases the safety in the treatment of a radioactive liquid waste.

According to the apparatus for treating a radioactive liquid waste of the present invention, the apparatus for treating a radioactive liquid waste containing a sodium salt includes a reducing device that partially reduces sodium nitrate contained in a radioactive liquid waste to convert the radioactive liquid waste into a reduced solution containing at least one of sodium hydroxide, sodium hydrogencarbonate, and sodium carbonate; an electrodialysis device including a permeable membrane which a sodium ion contained in the reduced solution selectively permeates, an anode chamber and a cathode chamber disposed with the permeable membrane therebetween, and an anode and a cathode respectively disposed on both sides of the permeable membrane; and a pH meter that measures at least one of pH of a radioactive substance concentrated solution recovered in the anode chamber and supplied from the anode chamber to the reducing device, pH in the reducing device, and pH at an entrance of the anode chamber. Therefore, pH can be retained in an alkaline state in the electrodialysis device and thus the separation of sodium ions (Na⁺) can be constantly maintained with high efficiency, which achieves the continuous treatment of the radioactive liquid waste. Since sodium ions that substantially do not contain radioactive nuclides can be selectively separated and recovered as sodium hydroxide from the radioactive liquid waste while at the same time only the radioactive nuclides can be separated from the radioactive liquid waste and concentrated, the volume reduction factor of the radioactive liquid waste can be increased. Since the liquid waste reducing step and the electrodialysis step are simultaneously performed and the reduced solution (including radioactive substance concentrated solution) is caused to circulate between the liquid waste reducing step and the electrodialysis step, the temperature of the solution needs only to be adjusted in at least one of the liquid waste reducing step and the electrodialysis step, which improves the energy efficiency. Since two actions (separation of sodium ions and decomposition of nitrate ions) are performed in a single system without disposing an intermediate layer, the amount of radioactive liquid waste retained in the system is small, which increases the safety in the treatment of a radioactive liquid waste.

### Brief Description of Drawings

[Fig. 1] Fig. 1 is a schematic diagram schematically showing an embodiment of an apparatus for treating a radioactive liquid waste of the present invention.
[Fig. 2] Fig. 2 is a graph showing the measurement results of pH of a reduced solution in an anode chamber in an experimental example of the present invention.
[Fig. 3] Fig. 3 is a graph showing the amount of sodium ions recovered and the amount of hydroxide ions produced in the experimental example of the present invention. Description of Embodiments

An embodiment of a method for treating a radioactive liquid waste and an apparatus for treating a radioactive liquid waste according to the present invention will be described.
This embodiment is provided to give a better understanding of the spirit of the invention through specific descriptions, and the present invention is not limited to the embodiment unless otherwise specified.

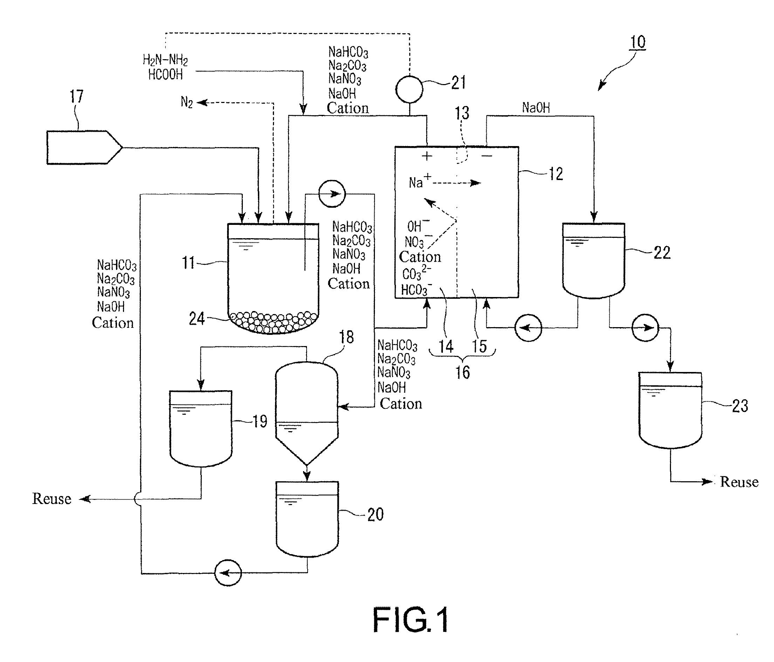

Fig. 1 is a schematic diagram schematically showing an embodiment of an apparatus for treating a radioactive liquid waste of the present invention.
An apparatus for treating a radioactive liquid waste (hereinafter referred to as a "radioactive liquid waste treating apparatus") 10 of this embodiment generally includes a reducing device 11, an electrodialysis device 12, a radioactive liquid waste storage tank 17, an evaporator 18, a condensed water receiving tank 19, a concentrate receiving tank 20, a pH meter 21, a circulating tank 22, and a catholyte receiving tank 23.
The electrodialysis device 12 includes a permeable membrane 13, an electrolytic cell 16 including an anode chamber 14 and a cathode chamber 15 disposed with the permeable membrane 13 therebetween, and an anode (not shown) disposed in the anode chamber 14 and a cathode (not shown) disposed in the cathode chamber 15. That is, the anode and the cathode are respectively disposed on both sides of the permeable membrane 13.

The reducing device 11 is a device that partially reduces (salt conversion) sodium nitrate (NaNO₃) contained in a radioactive liquid waste supplied from the radioactive liquid waste storage tank 17 to obtain a reduced solution containing at least one of sodium hydroxide (NaOH), sodium hydrogencarbonate (NaHCO₃), and sodium carbonate (Na₂CO₃). Herein, the term "partial reduction (salt conversion)" does not mean that sodium nitrate contained in a radioactive liquid waste is entirely reduced (salt conversion) to obtain at least one of sodium hydroxide, sodium hydrogencarbonate, and sodium carbonate, but means that an appropriate amount of sodium nitrate contained in a radioactive liquid waste is reduced so that pH of the reduced solution is within the range that is suitable for electrodialysis in the electrodialysis device 12.

An example of the reducing device 11 is a device that employs a treating method with a chemical reaction using a reducing agent. The device that employs a treating method with a chemical reaction using a reducing agent is preferably a device that employs a treating method performed in the presence of a catalyst.
An example of the device that employs a treating method with a chemical reaction using a reducing agent is a device that causes a reduction reaction (salt conversion reaction) of sodium nitrate to proceed by adding hydrazine (N₂H₄) and/or formic acid (HCOOH) as a reducing agent to a radioactive liquid waste containing sodium nitrate.

Examples of a catalyst 24 used in the reducing device 11 include a copper (Cu) catalyst, a palladium (Pd)-copper (Cu) catalyst, and a nickel (Ni)-copper (Cu) catalyst.

A membrane which sodium ions selectively permeate and which is composed of ceramic or the like is used as the permeable membrane 13 of the electrodialysis device 12. Examples of the permeable membrane 13 include a Na super ionic conductor membrane (NASICON membrane) and a sodium ion permselective membrane composed of (β-alumina or the like.
A dimensionally stable electrode (DSE) or a titanium electrode plated with platinum is used as the anode of the electrodialysis device 12.
A titanium electrode plated with platinum is used as the cathode of the electrodialysis device 12.

The anode chamber 14 of the electrodialysis device 12 is connected to the pH meter 21 through a channel.
The pH meter 21 is configured to measure pH of a radioactive substance concentrated solution that is separated and recovered in the anode chamber 14 by electrodialysis of a radioactive liquid waste in the electrodialysis device 12 and is supplied from the anode chamber 14 to the reducing device 11.
The pH meter 21 may be configured to measure pH in the reducing device 11 or pH at the entrance of the anode chamber 14 instead of the above-described pH, or may be configured to measure two or more of pH of the radioactive substance concentrated solution recovered in the anode chamber 14 in the electrodialysis step, pH in the reducing device 11, and pH at the entrance of the anode chamber 14.

The operation of the radioactive liquid waste treating apparatus 10 and a method for treating a radioactive liquid waste according to this embodiment will now be described.

First, a radioactive liquid waste, which is generated from a nuclear facility such as a spent nuclear fuel reprocessing facility, temporarily stored in the radioactive liquid waste storage tank 17 is reduced (salt conversion) in the reducing device 11 (liquid waste reducing step).
Specifically, the radioactive liquid waste is a liquid mainly composed of sodium nitrate and containing radioactive nuclides. The reducing (salt conversion) treatment in the liquid waste reducing step is a treatment that partially reduces sodium nitrate contained in the radioactive liquid waste to convert the radioactive liquid waste into a reduced solution containing at least one of sodium hydroxide, sodium hydrogencarbonate, and sodium carbonate.

The reducing (salt conversion) treatment is performed by a treating method with a chemical reaction using a reducing agent. The treating method with a chemical reaction using a reducing agent is preferably a treating method performed in the presence of a catalyst.
The chemical reaction using a reducing agent is preferably a reduction reaction caused to proceed by adding hydrazine (N₂H₄) and/or formic acid (HCOOH) to the radioactive liquid waste containing sodium nitrate.
An example of the treating method with a chemical reaction using a reducing agent in the presence of a catalyst is a reaction that reduces a nitrate ion to nitrogen by adding a reducing agent to the liquid waste containing sodium nitrate in the presence of a palladium-copper catalyst.

In the liquid waste reducing step, the production rate of at least one of sodium hydroxide, sodium hydrogencarbonate, and sodium carbonate (the production amount per unit time of at least one of sodium hydroxide, sodium hydrogencarbonate, and sodium carbonate), that is, the reduction rate of sodium nitrate contained in the radioactive liquid waste (the reduction amount per unit time of nitrate ions) is preferably controlled by the supply rate of a reducing agent to the radioactive liquid waste (the supply amount per unit time of a reducing agent).
In the liquid waste reducing step, the supply rate of a reducing agent to the radioactive liquid waste is not particularly limited. However, pH of the reduced solution produced in this step is suitably adjusted in accordance with the amount of sodium nitrate contained in the radioactive liquid waste so that pH of the reduced solution is within the range that is suitable for electrodialysis in the electrodialysis device 12.

For example, in the case where the amount (molarity) of sodium nitrate contained in the radioactive liquid waste is substantially constant in a range of 1 mol/L or more and 12 mol/L or less, the supply rate of a reducing agent to the radioactive liquid waste is preferably set to be 0.5 to 4 times the target recovery rate of sodium ions in the electrodialysis step and more preferably 1 to 3 times the recovery rate.
In this case, pH of the reduced solution produced in the liquid waste reducing step falls within the range that is suitable for electrodialysis in the electrodialysis device 12.
Since the recovery rate of sodium ions is set in accordance with the volume (scale) of the radioactive liquid waste to be treated, the supply rate of a reducing agent to the radioactive liquid waste is suitably adjusted in accordance with the recovery rate of sodium ions.

In the liquid waste reducing step, the supply rate of a reducing agent to the radioactive liquid waste is preferably controlled based on a measured value of at least one of pH of the radioactive substance concentrated solution recovered in the anode chamber 14 in the electrodialysis step, pH in the reducing device 11, and pH at the entrance of the anode chamber 14.
In this case, pH of the reduced solution produced in the liquid waste reducing step is suitably adjusted within the range that is suitable for electrodialysis in the electrodialysis device 12.

Furthermore, pH of the reduced solution produced in the liquid waste reducing step is preferably 10 or more and more preferably 11 or more.
When pH of the reduced solution produced in the liquid waste reducing step, that is, pH of the reduced solution supplied in the electrodialysis step performed with the electrodialysis device 12 is within the above-described range, the separation of sodium ions (Na⁺) can be constantly maintained with high efficiency in the electrodialysis step. Therefore, the radioactive liquid waste can be continuously treated. If pH of the reduced solution is less than 10, a voltage applied between the anode in the anode chamber 14 and the cathode in the cathode chamber 15 is increased, which increases the resistance of the permeable membrane 13. As a result, it becomes difficult for sodium ions to permeate the permeable membrane 13 and thus the separation efficiency of sodium ions (Na⁺) is decreased, which may inhibit the continuous treatment of the radioactive liquid waste. Moreover, if the voltage applied between the anode in the anode chamber 14 and the cathode in the cathode chamber 15 is increased, the power consumption is increased. Thus, the value as a process of radioactive liquid waste treatment is decreased.

After the reduction (salt conversion) treatment of sodium nitrate is performed, the reduced solution containing at least one of sodium hydroxide, sodium hydrogencarbonate, and sodium carbonate in high concentration is fed to the anode chamber 14 of the electrodialysis device 12.
The reduced solution containing at least one of sodium hydroxide, sodium hydrogencarbonate, and sodium carbonate in high concentration is specifically a solution containing sodium hydroxide in a concentration of 1 mol/L or more and preferably 1 mol/L or more and 35 mol/L or less, a solution containing sodium hydrogencarbonate in a concentration of 1 mol/L or more and preferably 1 mol/L or more and 3 mol/L or less, or a solution containing sodium carbonate in a concentration of 0.5 mol/L or more and preferably 0.5 mol/L or more and 4 mol/L or less.

A low-concentration sodium hydroxide solution is supplied in advance to the cathode chamber 15 of the electrodialysis device 12. The sodium hydroxide solution supplied to the cathode chamber 15 in advance has a concentration range that can efficiently perform electrodialysis. Specifically, the concentration is preferably 0.0001 mol/L or more and 5 mol/L or less.

The electrodialysis of the reduced solution containing at least one of sodium hydroxide, sodium hydrogencarbonate, and sodium carbonate is then performed in the electrodialysis device 12.
The temperature of the electrolytic cell 16 (anode chamber 14 and cathode chamber 15) of the electrodialysis device 12 during electrodialysis is suitably set in accordance with the type and concentration of sodium salt contained in the reduced solution and is preferably room temperature (20°C) or higher and 100°C or lower.

Through the electrodialysis of the reduced solution, only a sodium ion (Na⁺) among ions (sodium ion (Na⁺) and hydroxide ion (OH⁻)) originated from at least one of sodium hydroxide, sodium hydrogencarbonate, and sodium carbonate selectively permeates the permeable membrane 13 and moves from the anode chamber 14 into the sodium hydroxide solution in the cathode chamber 15.

Regarding sodium hydroxide contained in the reduced solution, in the electrodialysis, hydroxide ions (OH⁻) are recovered in the form of water in the anode chamber 14 as the separation and recovery of sodium ions proceed. Herein, a chemical reaction concerning hydroxide ions and represented by the following formula (1) proceeds in the anode chamber 14.

4OH⁻ **→** 2H₂O + O₂↑ + 4e⁻ (1)

Regarding sodium hydrogencarbonate or sodium carbonate contained in the reduced solution, in the electrodialysis, since pH of the radioactive liquid waste in the anode chamber 14 is temporarily decreased as the separation and recovery of sodium ions proceed, hydrogencarbonate ions (HC0₃⁻) or carbonate ions (C0₃⁻) are discharged from the anode chamber 14 in the form of carbon dioxide and consequently water is recovered. Herein, a chemical reaction concerning hydrogencarbonate ions and represented by the following formula (2) proceeds in the anode chamber 14.

2HCO₃⁻ + 2OH⁻ → 2H₂O + 2CO₂**↑** + O₂**↑** + 4e⁻ (2)

In addition, a chemical reaction concerning carbonate ions and represented by the following formulae (3) and (4) proceeds in the anode chamber 14.

CO₃⁻ + H₂O **→** HCO₃⁻ + OH⁻ (3)

2HCO₃⁻ + 2OH⁻ **→** 2H₂O + 2CO₂**↑** + O₂**↑** + 4e⁻ (4)

In the electrodialysis step, the recovery rate of sodium hydroxide is preferably controlled by a value of an electric current caused to flow between the anode of the anode chamber 14 and the cathode of the cathode chamber 15. As a result, the separation of sodium ions (Na⁺) can be constantly maintained with high efficiency in the electrodialysis step. For example, the current density applied is preferably 25 mA/cm² or more and 200 mA/cm² or less and more preferably 50 mA/cm² or more and 100 mA/cm² or less.

In the electrodialysis, since pH of the reduced solution in the anode chamber 14 is decreased as the separation and recovery of sodium ions proceed, a reduced solution having pH outside the predetermined range (10 or more) is separated and recovered as a radioactive substance concentrated solution and returned to the reducing device 11 through a channel. With this process, a reduced solution having pH adjusted to 10 or more is supplied from the reducing device 11 to the anode chamber 14 as described above, and pH of the reduced solution in the anode chamber 14 is kept at 10 or more.
Since a radioactive substance that does not permeate the permeable membrane 13 is left in the radioactive substance concentrated solution, this radioactive substance is returned to the reducing device 11 together with the radioactive substance concentrated solution.

As described above, pH measurement is performed, with the pH meter 21, on the radioactive substance concentrated solution returned to the reducing device 11 from the anode chamber 14. On the basis of the measurement value of pH, a reduction reaction is caused to proceed by adding a reducing agent so that pH of a mixture of the radioactive substance concentrated solution returned to the reducing device 11 and the reduced solution in the reducing device 11 is adjusted to be 10 or more.

In the method for treating a radioactive liquid waste according to the present invention, the production rate of at least one of sodium hydroxide, sodium hydrogencarbonate, and sodium carbonate in the liquid waste reducing step is equalized with the recovery rate of sodium hydroxide in the electrodialysis step. That is, the production rate of sodium ions in the reduced solution in the liquid waste reducing step is equalized with the rate permeation rate at which sodium ions permeate the permeable membrane 13 and move from the anode chamber 14 to the cathode chamber 15 in the electrodialysis step, whereby the separation of sodium ions (Na⁺) can be constantly maintained with high efficiency in the electrodialysis step.

The concentration of the sodium hydroxide solution in the cathode chamber 15 is gradually increased due to sodium ions that have permeated the permeable membrane 13 and have moved from the anode chamber 14 to the cathode chamber 15. When the concentration reaches a predetermined concentration, the sodium hydroxide solution is fed to the circulating tank 22.

Part of the sodium hydroxide solution is then recovered in the circulating tank 22, fed to the catholyte receiving tank 23, and recycled in a separated manner.
The sodium hydroxide solution left in the circulating tank 22 is diluted into a predetermined concentration, fed to the cathode chamber 15 again, and used for the electrodialysis of a radioactive liquid waste in the electrodialysis device 12.

In the case where the reduced solution (including radioactive substance concentrated solution) caused to circulate between the reducing device 11 and the electrodialysis device 12 is concentrated, part of the reduced solution supplied from the reducing device 11 to the electrodialysis device 12 is extracted and fed to the evaporator 18.

The solution fed from the anode chamber 14 is distilled in the evaporator 18, and radioactive nuclides are separated from the solution and recovered.
The radioactive nuclides subjected to separation and recovery are fed to the concentrate receiving tank 20 and then fed to the reducing device 11 again.

Water produced in this evaporation step is stored in the condensed water receiving tank 19 and recycled in a separated manner.

According to the radioactive liquid waste treating apparatus 10 of this embodiment and the radioactive liquid waste treating method that uses the radioactive liquid waste treating apparatus 10, in the liquid waste reducing step performed with the reducing device 11, sodium nitrate contained in the radioactive liquid waste is partially reduced to convert the radioactive liquid waste into a reduced solution containing at least one of sodium hydroxide, sodium hydrogencarbonate, and sodium carbonate. In the electrodialysis step performed with the electrodialysis device 12, sodium ions that have permeated the permeable membrane 13 are separated as sodium hydroxide in the cathode chamber 15, the radioactive substance left in the anode chamber 14 is separated as the radioactive substance concentrated solution, and the separated sodium hydroxide and radioactive substance concentrated solution are recovered. The production rate of at least one of sodium hydroxide, sodium hydrogencarbonate, and sodium carbonate in the liquid waste reducing step is equalized with the recovery rate of sodium ions in the electrodialysis step. Therefore, the concentration of sodium ions in the reduced solution is substantially kept constant and pH in the electrodialysis device 12 can be retained in an alkaline state (pH: 10 or more). Thus, since the separation of sodium ions (Na⁺) can be constantly maintained with high efficiency in the electrodialysis step, the radioactive liquid waste can be continuously treated. Furthermore, sodium ions that substantially do not contain radioactive nuclides can be selectively separated and recovered as sodium hydroxide from the radioactive liquid waste while at the same time only the radioactive nuclides can be separated from the radioactive liquid waste and concentrated. Thus, the volume reduction factor of the radioactive liquid waste can be increased. Specifically, the volume of the radioactive liquid waste can be reduced to about 1/1000 to 1/10 or less the volume of an untreated radioactive liquid waste. By reducing the volume, the types and total number of wastes can be decreased. The separated sodium is easily handled. Moreover, since the volume reduction factor is higher than a volume reduction factor achieved by a radioactive liquid waste treating method that employs conventional electrodialysis and the life of the permeable membrane disposed in the electrolytic cell is lengthened, the disposal cost and the area of a final disposal site can be significantly decreased. The liquid waste reducing step performed with the reducing device 11 and the electrodialysis step performed with the electrodialysis device 12 are simultaneously performed, and the reduced solution (including radioactive substance concentrated solution) is caused to circulate between the reducing device 11 and the electrodialysis device 12. Therefore, the temperature of the solution needs only to be adjusted in at least one of the liquid waste reducing step performed with the reducing device 11 and the electrodialysis step performed with the electrodialysis device 12, which improves the energy efficiency. Since nitrate ions can be reduced to inert nitrogen gas, the environmental load can be eliminated. In addition, since two actions (separation of sodium ions and decomposition of nitrate ions) are performed in a single system without disposing an intermediate layer, the amount of radioactive liquid waste retained in the system is small, which increases the safety in the treatment of a radioactive liquid waste.
Since sodium nitrate contained in the radioactive liquid waste is subjected to salt conversion to produce a sodium salt and then electrodialysis is performed on the radioactive liquid waste containing the sodium salt, an acid (nitric acid) or the like containing radioactive nuclides is not produced and thus the treatment of concentrated radioactive liquid waste can be simplified. Moreover, by producing a sodium salt through salt conversion of sodium nitrate, the environmental load caused by nitrate ions can be eliminated.

The present invention will now be further specifically described based on an experimental example, but is not limited thereto.

A continuous treatment was performed as follows. A solution (hereinafter referred to as a "reaction solution") containing sodium nitrate as a main component was reduced by a catalytic method using the same apparatus as the radioactive liquid waste treating apparatus shown in Fig. 1; nitrate ions (NO₃⁻) derived from sodium nitrate contained in the reaction solution were decomposed to convert sodium nitrate (NaNO₃) into sodium hydroxide (NaOH); and sodium hydroxide produced was recovered by an electrodialysis method.
By supplying hydrazine (N₂H₄·H₂O) to a catalytic tank of a reducing device filled with a Pd-Cu catalyst at a supply rate of 7 g/h (0.15 mol/h), the nitrate ions contained in the reaction solution were partially reduced to obtain a reduced solution. The reduced solution was extracted using a pump and supplied to an anode chamber of an electrodialysis device while at the same time the reduced solution was returned to the catalytic tank of the reducing device from the anode chamber. By repeatedly performing this process, the reduced solution (including reaction solution) was caused to circulate.

The amount (molarity) of sodium nitrate contained in the reaction solution was 2 mol/L and the amount (molarity) of sodium hydroxide was 0.01 mol/L.
The temperature of the reduced solution in the anode chamber was controlled to 65°C.

The amount (molarity) of sodium nitrate contained in the reduced solution in the anode chamber was 2 mol/L and the amount (molarity) of sodium hydroxide was 0.01 mol/L.

The amount (molarity) of sodium hydroxide contained in the reduced solution in the cathode chamber was 0.2 mol/L. The temperature of the reduced solution in the cathode chamber was controlled to 65°C.

In the electrodialysis performed with the electrodialysis device, an electric current was caused to flow between an anode of the anode chamber and a cathode of the cathode chamber at a current value of 3A and a current density of 70 mA/cm².
The pressure of the reduced solution supplied against the permeable membrane was 0.01 MPa.

Regarding samples recovered from the anode chamber and the cathode chamber, pH and the concentrations of sodium ions, ammonium ions (NH₄⁺), nitrate ions (NO₃⁻), and nitrite ions (NO₂⁻) were measured hourly from the initiation of the electrodialysis.

The experimental results are examined.

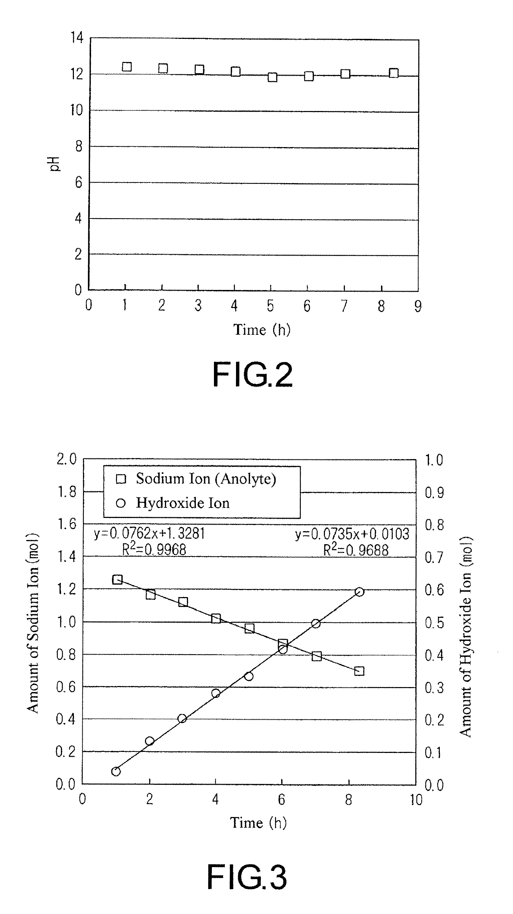

Fig. 2 is a graph showing the measurement results of pH of the reduced solution in the anode chamber.
It can be seen from the graph shown in Fig. 2 that pH was slightly decreased five hours after the test began. This is probably because the amount of hydrazine supplied was decreased over time. Thus, from five hours after the test began, the amount of hydrazine supplied was increased so as to become constant in a controlled manner. As a result, it was confirmed that the decomposition of nitrate ions and the recovery of sodium ions could be conducted while pH of the reduced solution was kept constant.

Fig. 3 is a graph showing the amount of sodium ions recovered and the amount of hydroxide ions produced.
The amount of hydroxide ions produced was determined from the measured amount of nitrate ions decreased in accordance with the following reaction formula (5).

4NaNO₃ + 5N₂H₄ → 7N₂ + 4NaOH + 8H₂O (5)

From a slope of a change in the amount of substance of sodium ions in the graph shown in Fig. 3, the recovery rate of sodium ions was 0.076 mol/h. From a slope of a change in the amount of substance of hydroxide ions in the graph shown in Fig. 3, the production rate of hydroxide ions was 0.074 mol/h.
As described above, it was confirmed that the recovery rate of sodium ions was substantially equal to the production rate of hydroxide ions. Thus, it was experimentally demonstrated that the reaction solution could be treated while pH of the reduced solution was substantially constant because the recovery rate of sodium hydroxide using electrodialysis was substantially equal to the production rate of sodium hydroxide using a catalytic method.
As a result, it was confirmed that, by controlling the recovery rate of sodium hydroxide or the production rate of sodium hydroxide, that is, by controlling the supply rate of hydrazine or a value of an electric current caused to flow between the anode and the cathode, the reaction solution could be treated while pH was controlled.

From the comparison with a recovery rate of 0.082 mol/h obtained from a value of an electric current caused to flow between the anode and the cathode, the current efficiency in this test was found to be 93%.

It was confirmed from the results of these tests that, by equalizing the production rate of at least one of sodium hydroxide, sodium hydrogencarbonate, and sodium carbonate using a catalytic method with the recovery rate of sodium ions using electrodialysis, the reaction solution could be continuously treated while pH of the reduced solution was kept constant.
Therefore, pH of the reduced solution during treatment can be freely set by setting, in advance, the production rate of at least one of sodium hydroxide, sodium hydrogencarbonate, and sodium carbonate using a catalytic method and the recovery rate of sodium ions using electrodialysis. Furthermore, pH of the reduced solution during treatment can be adjusted by controlling the supply rate of hydrazine (that is, the production rate of at least one of sodium hydroxide, sodium hydrogencarbonate, and sodium carbonate) or by controlling a value of an electric current caused to flow between the anode and the cathode (that is, the recovery rate of sodium ions).

### Industrial Applicability

According to the present invention, there can be provided a method for treating a radioactive liquid waste and an apparatus for treating a radioactive liquid waste that can reduce nitrate ions to harmless nitrogen gas and can efficiently separate and recover sodium ions from a radioactive liquid waste mainly composed of sodium nitrate in a continuous manner without containing radioactive nuclides.

### DESCRIPTION OF THE REFERENCE SYMBOLS

- 10:: Radioactive liquid waste treating apparatus
- 11:: Reducing device
- 12:: Electrodialysis device
- 13:: Permeable membrane
- 14:: Anode chamber
- 15:: Cathode chamber
- 16:: Electrolytic cell
- 17:: Radioactive liquid waste storage tank
- 18:: Evaporator
- 19:: Condensed water receiving tank
- 20:: Concentrate receiving tank
- 21:: pH meter
- 22:: Circulating tank
- 23:: Catholyte receiving tank
- 24:: Catalyst

## Claims

1. A method for treating a radioactive liquid waste containing a sodium salt, the method comprising:
a liquid waste reducing step of partially reducing sodium nitrate contained in a radioactive liquid waste to convert the radioactive liquid waste into a reduced solution containing at least one of sodium hydroxide, sodium hydrogencarbonate, and sodium carbonate; and
an electrodialysis step of performing electrodialysis of the reduced solution by supplying the reduced solution to an anode chamber of an electrolytic cell, the electrolytic cell including an anode and a cathode disposed on both sides of a permeable membrane which a sodium ion selectively permeates,
wherein, in the electrodialysis step, a sodium ion that has permeated the permeable membrane is separated and recovered as sodium hydroxide in a cathode chamber, a radioactive substance left in the anode chamber is separated as a radioactive substance concentrated solution, and the separated sodium hydroxide and radioactive substance concentrated solution are recovered; and
a production rate of the at least one of sodium hydroxide, sodium hydrogencarbonate, and sodium carbonate in the liquid waste reducing step is equalized with a recovery rate of the sodium ion in the electrodialysis step.

2. The method for treating a radioactive liquid waste according to Claim 1, wherein the liquid waste reducing step is performed by a treating method with a chemical reaction using hydrazine and/or formic acid as a reducing agent.

3. The method for treating a radioactive liquid waste according to Claim 2, wherein the treating method with a chemical reaction using hydrazine and/or formic acid as a reducing agent is a treating method performed in the presence of a catalyst.

4. The method for treating a radioactive liquid waste according to Claim 2 or 3, wherein, in the liquid waste reducing step, the production rate of the at least one of sodium hydroxide, sodium hydrogencarbonate, and sodium carbonate is controlled by a supply rate of the reducing agent to the radioactive liquid waste.

5. The method for treating a radioactive liquid waste according to Claim 1, wherein pH of the reduced solution produced in the liquid waste reducing step is 10 or more.

6. The method for treating a radioactive liquid waste according to Claim 5, wherein, in the liquid waste reducing step, a supply rate of the reducing agent to the radioactive liquid waste is controlled based on a measured value of at least one of pH of the radioactive substance concentrated solution recovered in the anode chamber in the electrodialysis step, pH in a reducing device that reduces the radioactive liquid waste, and pH at an entrance of the anode chamber.

7. The method for treating a radioactive liquid waste according to Claim 1, wherein the radioactive substance concentrated solution recovered in the anode chamber in the electrodialysis step is supplied in the liquid waste reducing step.

8. The method for treating a radioactive liquid waste according to Claim 1, wherein, in the electrodialysis step, the recovery rate of the sodium ion is controlled by a value of an electric current caused to flow between the anode and the cathode.

9. An apparatus for treating a radioactive liquid waste containing a sodium salt, the apparatus comprising:
a reducing device that partially reduces sodium nitrate contained in a radioactive liquid waste to convert the radioactive liquid waste into a reduced solution containing at least one of sodium hydroxide, sodium hydrogencarbonate, and sodium carbonate;
an electrodialysis device including a permeable membrane which a sodium ion contained in the reduced solution selectively permeates, an anode chamber and a cathode chamber disposed with the permeable membrane therebetween, and an anode and a cathode respectively disposed on both sides of the permeable membrane; and
a pH meter that measures at least one of pH of a radioactive substance concentrated solution recovered in the anode chamber and supplied from the anode chamber to the reducing device, pH in the reducing device, and pH at an entrance of the anode chamber.
